# EUROPEAN PATENT APPLICATION

(11) **EP 4 793 031 A2**
(43) Date of publication of application: **19.08.2026**
(21) Application number: 26189618.7
(22) Date of filing: 16.12.2021
(51) Int. Cl.: B29D 35/12

(54) **A MOULD DEVICE FOR DIRECT INJECTION MOULDING OF FOOTWEAR, A SYSTEM COMPRISING SUCH A MOULD DEVICE AND A DIRECT INJECTION MOULDING METHOD**

(30) Priority: 16.12.2020 DK PA202070841
(62) Document number(s) of the earlier application(s) in accordance with Art. 76 EPC: 21834729.2 / 4 263 198
(71) Applicant: Ecco Sko A/S, 6261 Bredebro (DK)
(72) Inventor: BOSSEN, Jacob, 6261 Bredebro (DK)
(74) Representative: Patentgruppen A/S

(57) **Abstract**

A direct injection moulding system (130) for performing at least part of a direct injection moulding manufacturing of footwear, said system comprising at least one mould device (2) for defining at least partly a mould cavity (40) in combination with a last (20) carrying a footwear upper (30). The system comprises a conveyor system for conveying the at least one mould device (2) between a plurality of stations (140a, 140b, 140c, 140d). The at least one mould device (2) comprises a last holding device (16), which is configured for holding said last (20) carrying said footwear upper at least when performing the direct injection moulding of a sole part onto said footwear upper. The direct injection moulding system (130) is configured for conveying the at least one mould device (2) from one station to a subsequent station out of said plurality of stations (140a, 140b, 140c, 140d) with said last holding device (16) being an integrated part of said mould device (2).

## Description

### Field of the invention

The invention relates to a direct injection moulding system for performing at least part of a direct injection moulding manufacturing of footwear, said system comprising at least one mould device for defining at least partly a mould cavity in combination with a last carrying a footwear upper, said system comprising a conveyor system for conveying said at least one mould device between a number of stations.

### Background of the invention

Production of footwear by the direct soling of shoe uppers, which is understood as at least partly automatized production of soles while simultaneously mounting the soles on the uppers, where the sole production preferably is carried out through an injection moulding process, is generally known within the industry. Such a technology is described for example in US 4,608,724 A, which specifically discloses a machine having two moulding stations, each having a moulding unit and a movable holder for the last. By this technology the moulding unit as well as the movable holder are occupied while e.g. the sole is curing, and the capacity is thus relatively low. In connection with higher capacity production, automated machines with a multiple of stations are utilized, arranged in a turning table, a round table or a carrousel type footwear production machine. In connection with such prior art DIP machines, the mould is arranged in a fixed relative position, where it cooperates with a last handling device, e.g. a device, which holds the last, while an upper is mounted and which serves to position the last with the upper mounted on it in relation to the mould, such that the last and the upper is held in the desired position, while the moulding of e.g. the sole of the footwear is performed and furthermore during the curing of the sole. Thus, also in connection with this prior art the mould and the corresponding last handling device will be occupied for the entire period where moulding and curing takes place.

A further example of a prior art injection moulding apparatus is disclosed by GB 849917A, which relates to a manually operated injection moulding apparatus for injection moulding of soles on footwear uppers. The apparatus comprises a base plate that is bolted to the floor and that supports the mould in such a manner that the mould may be tilted by use of a crank. The mould essentially comprises two lateral assemblies that are pivotably connected and when combined forms the periphery of the sole. Further, the apparatus comprises a horizontal last base plate, which has fixing means for supporting a last in an upside-down position, whereby the two lateral assemblies close around a footwear upper positioned on the last. Further, the apparatus has a pivotable lid, which has to be closed down to form a closed chamber around the upper on the last and which has an orifice through which moulding material can be forced. Thus, the last with a footwear upper is placed in an upside-down position, the two lateral assemblies are closed around the footwear upper, the lid is closed down as well and the respective parts are clamped together to form a mould assembly having a box shape. Hereafter, the mould assembly is tilted manually by use of the crank, thereby bringing the orifice in the lid in a position, where the orifice is presented to an injection machine. It is noted that such a prior art injection moulding apparatus is destined for stationary use and for manual operation. Furthermore, it is noted that the last is fully enclosed within the box-shaped mould.

### Summary of the invention

The invention is set out in the appended set of claims.

In an example, a mould device for production of footwear by direct injection moulding (DIP) may comprise
- a first side mould and a second side mould,
- a bottom mould,

wherein said first side mould and said second side mould are configured to be movable laterally in relation to each other,
wherein said bottom mould is configured to be movable vertically in relation to said first side mould and said second side mould,
wherein said first side mould, said second side mould and said bottom mould are configured to define at least part of a mould cavity for said direct injection moulding of footwear, and
wherein said mould device further comprises a last holding device, said last holding device being connected to said mould device or configured to be connectable to said mould device.

Hereby, it may be achieved that the mould device may be used for direct injection moulding of footwear in a direct injection process, where the mould device may be e.g. handled with greater freedom as opposed to e.g. a mould device that is utilized in connection with an automated machine with a multiple of stations arranged in a turning table, a round table or a carrousel type footwear production machine. In connection with such prior art DIP machines, the mould is arranged in a fixed relative position, where it cooperates with a last handling device, e.g. a device, which holds the last, while an upper is mounted and which serves to position the last with the upper mounted on it in relation to the mould, such that the last and the upper is held in the desired position, while the moulding of e.g. the sole of the footwear is performed and furthermore during the curing of the sole. This last handling device is in connection with the prior art a part of the e.g. carrousel type production machine, which means that the mould and the corresponding last handling device will be occupied for the entire period where moulding and curing takes place. By the invention it may be achieved that the mould device is not in need of the service of the e.g. last handling device for longer than it takes to position the last in relation to the mould device and having the mould device, i.e. the last holding device grip the last or the last holder. Thus, the e.g. last handling device may be used more efficiently, e.g. by being able to facilitate the positioning of lasts in connection with a greater number of moulds as is otherwise the case in connection with the prior art moulds.

Furthermore, as it is achieved that the mould device may in itself hold the last during moulding and furthermore during curing, etc. it may be achieved that the mould device and the footwear product being manufactured may be e.g. handled, moved, conveyed without consideration to the e.g. last handling device, whereby various options for the manufacturing process may be facilitated.

Even further, it may be achieved that the last may be held such that it may be fixed in a desired vertical position by the last holding device that furthermore may position an upper part of the last in relation to the mould, e.g. the side moulds. Further, the last and the upper mounted on the last, may further be positioned by the contact with the first and the second side mould, e.g. the inner surfaces of these and in particular a contact surface of these, e.g. a circumferential lip or the like.

According to an embodiment, said last holding device may comprise a last positioning arm fixed to each of said first side mould and said second side mould, said last positioning arms being designed for gripping a last or a last holder holding a last.

Hereby, it may be achieved that the last holding device may be provided as a part that may be provided as an integrated part of a usual mould part, i.e. a side mould. A further option is that the last holding device may be provided as add-on parts that may be fixed to the side moulds, e.g. by releasable connections, bolt connections, clamp connections, various threaded connections, etc. and that the last holding device, e.g. the last positioning arms may be removably fixed and may be exchangeable.

According to an embodiment, said last positioning arms may be designed for gripping a part of said last or said last holder, when said first side mould and said second side mould are abutting each other.

Hereby, it may be achieved that the last holding device is arranged such that a grip of the last or the last holder may be automatically effected in the course of the normal operation of the mould, e.g. when the side moulds of the mould device are moved relatively towards each other in a horizontal direction in order to form part of the shape of the mould cavity that is restricted in the upwards direction by the footwear upper mounted on the last and the circumferential contact between the upper and contact surfaces, e.g. including a lip or the like, on the inner surfaces of the side moulds.

According to an embodiment, said last positioning arms may be designed at or near an upper end to cooperate with a corresponding part of the last or the last holder.

Hereby, the last holding device and the last positioning arms may be configured in an expedient manner and with an appropriate design, where a possible last handler may position the last or the last holder such that the last positioning arms simply grip around an e.g. upper part of the last or the last holder before or while the first and the second side moulds are being moved towards each other. Thus, a possible last handler such as e.g. an industrial robot may operate efficiently and without interfering with e.g. the last positioning arms. As soon as the e.g. last positioning arms has gripped the last or the last holder, the last handler may be removed and may be used e.g. in connection with another mould device.

According to an embodiment, the last holding device may be configured to provide a fixation for relative movement of the last or the last holder at least in an upwards direction.

Hereby, the last holding device may effectively position the last in a desired vertical position in relation to the mould, e.g. in relation to an end position for the bottom mould, such that in case there may be a tolerance in the grip between the last holding device and the last, the last will, e.g. forced by the forces provided by an expanding moulding material, end in a desired vertical position, which will not be exceeded.

According to an embodiment, said last holding device, e.g. said last positioning arms may be removably fixed to said first side mould and said second side mould.

Hereby, the last holding device may readily be exchanged, for example in case another type of last holding device is needed, another type of footwear is to be manufactured, demanding another type of the last holding device, last positioning arms etc. The last positioning arms may be removably fixed by threaded connections, bolts, releasable clamps, spring loaded locking means, etc.

According to an embodiment, said last positioning arms may be configured having a length corresponding to the footwear, which is being manufactured by the direct injection moulding.

Hereby, the mould device may expediently be used for manufacturing a wide variety of footwear, e.g. including shoes, boots, sandals and numerous other examples of footwear since the last holding device and/or the last positioning arms may easily be exchanged for a type, which is useable and/or required in connection with manufacturing of a particular type, size, etc. of footwear.

According to an embodiment, said mould device may comprise a mould lock comprising a mould locking device for locking said first side mould and said second side mould together in a relative position, abutting each other.

Hereby, the mould device may, when the first and the second side mould has been moved together in an abutting position, wherein the last holding device furthermore has gripped the last or a possible last holder, be locked together by the mould lock, such that any means for forcing the two side moulds together are not necessary in order to maintain the relative position of the two side moulds and thus also in order to maintain the grip of the holding device on the last or a possible last holder. The mould lock may be configured in a multitude of ways and using a wide scope of components to achieve that the side moulds are held together, as it will be apparent to a skilled person. It is noted that this locking arrangement may also enable that the mould devices may be moved freely, e.g. in a flow, without any active force to keep the side moulds together.

According to an embodiment, said mould lock for locking said first side mould and said second side mould together may comprise a mould locking device for cooperating with locking taps arranged at said first side mould and said second side mould, e.g. at respective end parts of these.

Hereby, the mould lock for locking the two side moulds together may be designed in a relatively simple and straightforward manner, which furthermore may have the advantage that the mould lock is easily activated or deactivated, for example by effecting a linear movement of the mould locking device. Furthermore, a relatively strong and effective locking may be achieved, in particular when both ends of the mould device may comprise a mould locking device.

According to an embodiment, said mould device may comprise a bottom mould lock for locking said bottom mould relative to said first side mould and/or said second side mould.

Hereby, the mould device may, when the first and the second side mould have been moved together in an abutting position and when the bottom mould has been moved vertically to a desired position, e.g. an end position, for example defined by contacting surface parts, the bottom mould may be locked in position to one or both of the side moulds, e.g. by means of one or more bottom mould locking taps or any other suitable means. Thus, any actuator or the like which has been used for moving the bottom mould upwards, is no longer required and the side moulds and the bottom mould are locked together. Furthermore, as explained above, in this locked position of the mould parts, the last holding device has furthermore gripped the last or a possible last holder, whereby the last is locked together with the side moulds and the bottom mould, thereby defining the mould cavity. As it will be understood, the mould device may in such a state where the parts are locked together and the last is held in a predefined position, serve as mould for moulding of a sole, e.g. an outsole or a midsole to a footwear upper that is mounted on the last, e.g. by injecting sole moulding material into the mould cavity. It is noted that the injected material may have been injected prior to this locked state, e.g. in a process step where the bottom mould is being moved upwards, subsequent to which the bottom mould of the mould device is locked at the end position and the moulding process is continued, e.g. by the injected material expanding to fill the mould cavity. In both such cases the mould device may subsequently serve for containing the moulded footwear part, while the moulded part is curing, which may be a relatively lengthy process. However, as it has been explained herein, the mould device may in such a state not require any means, e.g. means external to the mould device, for e.g. keeping the mould parts together, for holding the last, etc., and the mould device may thus also in this state be e.g. transported independent of other means and may be moved freely, e.g. in a flow. Thus, such a mould device containing a moulded footwear part shortly after the moulding, while the moulded part is curing and while the moulded footwear part may be stored for other reasons, may for example be conveyed as an independent object, e.g. via a conveyor such as a belt conveyor, a chain conveyor, by means of a cart or the like to a selected location, a temporary storage location, a buffer area or the like, where it may be stored until the particular mould device may be retrieved and transported further on for further processing of the moulded footwear part.

According to an embodiment, said mould device may be configured to be portable.

Hereby, it may be achieved that the mould device may be an independently movable object, e.g. prior to injection moulding, during processing, during curing of an injected sole part, etc. Furthermore, as the mould device due to the last holding device may in itself hold the last during moulding and furthermore during curing, etc., it may be achieved that the mould device, the last and possibly a last holder for holding said last and the footwear product being manufactured may be e.g. handled, moved, conveyed, stored without consideration to the e.g. last handling device, whereby various options for the manufacturing process may be facilitated, e.g. since the mould device, the last and possibly a last holder for holding said last and the footwear product being manufactured may be moved, conveyed, stored etc. independently, e.g. independent of other mould devices and/or independent of e.g. a last handler, injection equipment and/or other types of equipment.

According to an embodiment, said last holding device may be configured for holding the last at an upper region of the last.

Hereby, it may be achieved that a last, when held by the last holding device at an upper region, e.g. a region above the ankle or instep area, will be positioned such that the upper region is positioned above a mould cavity and may be accessible for e.g. subsequent gripping by a handler.

According to an embodiment, said last holding device may be configured for holding the last by a last holder at an upper region of the last.

Hereby, it may be achieved that a last holder that is holding a last, said last being held at an upper region, e.g. a region above the ankle or instep area, will be positioned such that the last holder is positioned above a mould cavity and may be accessible for e.g. subsequent gripping by a handler.

According to an embodiment, said last holding device may be configured for holding the last or the last holder with an upper part of the last in an upwards direction.

It is noted that by an upper part of the last is meant a part that is above the ankle or instep area of the last. By this embodiment it may be achieved that the last or the last holder is positioned above a mould cavity and may be accessible for e.g. subsequent gripping by a handler.

According to an embodiment, said last holding device may be configured for holding the last or the last holder with at least part of the last or the last holder, respectively, being accessible at a level above the mould device.

Hereby, it may be achieved that e.g. a last handler or corresponding equipment may grip or otherwise manipulate the last or the last holder, for example when the last or the last holder is being released from the last holding device.

According to an embodiment, said last holding device may be configured for holding the last or the last holder by a direct coupling.

Hereby, it may be achieved that the last or the last holder can be held in a precise and secure manner, e.g. with the last positioned at a desired height and with a desired position in a horizontal plane. Furthermore, it is noted that by use of a direct coupling, the last or the last holder may be gripped by the last holding device, e.g. the last positioning arms, in a secure and reproduceable manner, which facilities automatization to be performed. It is noted that a standardization may be applied, thus meaning that the lasts or last holders may be configured with a standard interface that meets with the corresponding part of the last holding device. Even further, it is noted in this connection that the part of the last that is carrying the footwear upper, in general will be positioned in the longitudinal direction and the lateral direction by the contact that is made by the first side mould and the second side mould, e.g. by a lip on these mould parts that will be contacting the footwear upper when the first side mould and the second side mould are being brought together. Thus, the positioning of the last may be effected by a combination of the positioning made by the last holder and the positioning made by the side moulds.

According to an embodiment, said mould device may comprise an identifier, e.g. an RFID device, which identifier is associated with one or more parts of the mould device.

Hereby, it may be achieved that the mould device, which may be moved, transported conveyed, stored, etc, for example when it is containing a moulded footwear part that for example is within a curing process, may be identified, tracked, etc, by use of said identifier. Furthermore, it is noted that said identifier may furthermore serve for facilitating retrieval of data relating to a possible moulded footwear part that may be contained within the mould device. Even further, it is noted that the mould device may comprise more than one identifier, e.g. one for the side mould(s), one for the bottom mould, etc. and that a last may also comprise an identifier, such that these parts may be identified on their own, e.g. in case that they are being transported, processed, prepared, etc. in separate flows and combined for a moulding process at a later stage. Also, it is noted that an identifier may comprise e.g. circuit(s) relevant for information related to the mould device.

According to an embodiment, such an identifier that is associated with one or more parts of the mould device, may be selected from a multitude of identification means, such as e.g. an RFID device, a label, a bar code, an image, a sign, etc.

It is noted that by use of identifiers for the mould devices and/or parts of the mould devices, it may be achieved that a plurality of mould devices may be used in a direct injection moulding system, where the characteristics of the footwear that may be produced by each mould is identifiable by the identifiers. Thus, the footwear being produced may not be identical for e.g. a group of mould devices and the footwear being produced by a mould device may be a unique footwear, e.g. as regards size, shape, left/right and/or any other characteristic. When each of the plurality of mould devices that as mentioned above may be moved or conveyed independently, reaches e.g. a workstation, the e.g. machinery or control unit may e.g. read the identifier(s) and may based hereon determine which processing needs to be made at the particular step.

A system for production of footwear by direct injection moulding may comprise a mould device according to any of the above examples, the system further comprising a last and possibly a last holder for holding said last.

By such as system, it may be achieved that the mould device may be used for direct injection moulding of footwear in a direct injection process, where the mould device may be e.g. handled with greater freedom as opposed to e.g. a mould device that is utilized in connection with an automated machine with a multiple of stations arranged in a carrousel type footwear production machine, e.g. a carrousel type DIP (Direct Injection Process) footwear production machine as it has been elucidated above. In connection with the prior art DIP machines, the mould is arranged in a fixed relative position, where it cooperates with a last handling device, e.g. a device, which holds the last, while an upper is mounted and which serves to position the last with the upper mounted on it in relation to the mould, such that the last and the upper is held in the desired position, while the moulding of e.g. the sole of the footwear is performed and furthermore during the curing of the sole. This last handling device is in connection with the prior art a part of the e.g. carrousel type production machine, which means that the mould and the corresponding last handling device will be occupied for the entire period where moulding and curing takes place. By the invention it may be achieved that the mould device is not in need of the service of the e.g. last handling device for longer than it takes to position the last in relation to the mould device and having the mould device, i.e. the last holding device grip the last or the last holder. Thus, the e.g. last handling device may be used more efficiently, e.g. by being able to facilitate the positioning of lasts in connection with a greater number of moulds as is otherwise the case in connection with the prior art moulds.

Furthermore, as it is achieved that the mould device may in itself hold the last during moulding and furthermore during curing, etc., it may be achieved that the mould device, the last and possibly a last holder for holding said last and the footwear product being manufactured may be e.g. handled, moved, conveyed without consideration to the e.g. last handling device, whereby various options for the manufacturing process may be facilitated.

Even further, by the system it may be achieved that the last may be held such that it may be fixed in a desired vertical position by the last holding device that furthermore may position an upper part of the last in relation to the mould, e.g. the side moulds. Further, the last and the upper mounted on the last, may further be positioned by the contact with the first and the second side mould, e.g. the inner surfaces of these and in particular a contact surface of these, e.g. a circumferential lip or the like.

According to an embodiment, said system may further comprise an automated handler for positioning a last and possibly a last holder, said last carrying a footwear upper, at a predetermined position relative to the mould device, where said first side mould and said second side mould are at least a predetermined distance laterally from each other, wherein said last holding device is configured to hold said last, possibly by said last holder, when said first side mould and said second side mould are in a position abutting each other.

Hereby, it may be achieved that the last holding device is arranged such that a grip of the last or the last holder, that is being positioned by the automated handler, may be automatically effected in the course of the normal operation of the mould, e.g. when the side moulds of the mould device are moved relatively towards each other in a horizontal direction in order to form part of the shape of the mould cavity that is restricted in the upwards direction by the footwear upper mounted on the last and the circumferential contact between the upper and contact surfaces, e.g. including a lip or the like, on the inner surfaces of the side moulds.

According to an embodiment, the system may further comprise a side mould actuator for moving said first side mould and said second side mould laterally in relation to each other.

Hereby, it may be achieved that the opening and/or closing of the mould device may be performed in an efficient and potentially automated manner. It is noted that the first side mould and/or the second side mould may further be moved by tilting or flipping, e.g. by an angular movement, whereby the mould device is opened, which may serve to provide more space in order to perform such operations as cleaning of the mould, inspection, preparation, etc.

According to an embodiment, the system may further comprise a bottom mould actuator for moving said bottom mould vertically in relation to said first side mould and said second side mould.

Hereby, it may be achieved that the system may perform in an efficient and potentially automated manner.

According to an embodiment, the system may further comprise injection moulding equipment for performing direct injection moulding of a sole part in said mould cavity.

A direct injection moulding system according to the invention for performing at least part of a direct injection moulding manufacturing of footwear comprises at least one mould device for defining at least partly a mould cavity in combination with a last carrying a footwear upper, said system comprising a conveyor system for conveying said at least one mould device between a plurality of stations, said at least one mould device comprising a last holding device, which is configured for holding said last carrying said footwear upper at least when performing the direct injection moulding of a sole part onto said footwear upper,
wherein the direct injection moulding system is configured for conveying said at least one mould device from one station to a subsequent station out of said plurality of stations with said last holding device being an integrated part of said mould device.

Hereby, a system may be provided, which allows a greater degree of freedom to be taken advantage of as regards the handling of the mould device and as regards the layout of the manufacturing steps that are taking place in connection with the direct injection processes connected to production of footwear.

According to an embodiment, said mould device may comprise mould parts that are relatively movable and that the system is configured for effecting a relative movement of at least some of said mould parts at at least one of said plurality of stations.

Hereby, a direct injection moulding manufacturing of footwear may be enabled in an automated manner, e.g. by one or more of the stations comprising equipment to provide the required movements of the mould device.

According to an embodiment, said mould parts may comprise
- a first side mould and a second side mould,
- a bottom mould,

wherein said first side mould and said second side mould are configured to be movable laterally in relation to each other,
wherein said bottom mould is configured to be movable vertically in relation to said first side mould and said second side mould.

Hereby, the mould device is configured in an expedient manner.

According to an embodiment, said last holding device may comprise a last positioning arm fixed to each of said first side mould and said second side mould, said last positioning arms being designed for gripping said last or a last holder holding said last.

Hereby, it may be achieved that the last holding device may be provided as a part that may be provided as an integrated part of a usual mould part, i.e. a side mould. A further option is that the last holding device may be provided as add-on parts that may be fixed to the side moulds, e.g. by releasable connections, bolt connections, clamp connections, various threaded connections, etc. and that the last holding device, e.g. the last positioning arms may be removably fixed and may be exchangeable.

According to an embodiment, said plurality of stations may comprise a pre-injection station, where said last carrying said footwear upper is introduced to said mould device and said last holding device is operated to hold said last carrying said footwear upper.

According to an embodiment, said last holding device may be operated to hold said last carrying said footwear upper by a relative movement of at least some of said mould parts, e.g. by a lateral movement of said first side mould and said second side mould in relation to each other.

Hereby, it may be achieved that the last holding device is arranged such that a grip of the last or the last holder may be automatically effected in the course of the normal operation of the mould as provided by a station, e.g. when the side moulds of the mould device are moved relatively towards each other in a horizontal direction in order to form part of the shape of the mould cavity that is restricted in the upwards direction by the footwear upper mounted on the last and the circumferential contact between the upper and contact surfaces, e.g. including a lip or the like, on the inner surfaces of the side moulds.

According to an embodiment, said pre-injection station may comprise a mould lock activator for locking mould parts, e.g. said first side mould and said second side mould in relation to each other.

Hereby, the mould device may be locked together by the mould lock, such that any means for forcing the two side moulds together are not necessary in order to maintain the relative position of the two side moulds and thus also in order to maintain the grip of the holding device on the last or a possible last holder. The mould lock and thus also the activator may be configured in a multitude of ways and using a wide scope of components to achieve that the side moulds are held together, as it will be apparent to a skilled person. It is noted that this locking arrangement may also enable that the mould devices may be moved freely, e.g. in a flow, without any active force to keep the side moulds together.

According to an embodiment, said pre-injection station may comprise an automated handler for introducing and positioning said last carrying said footwear upper to said mould device.

According to an embodiment, said plurality of stations may comprise an injection station arranged subsequent to said pre-injection station, where said injection station comprises mould injection equipment for injecting moulding material into said mould cavity.

According to an embodiment, said injection station may comprise a bottom mould actuator for moving the bottom mould vertically in relation to said first side mould and said second side mould.

According to an embodiment, said injection station may comprise an activator for a bottom mould lock for locking said bottom mould in the vertical direction.

According to an embodiment, said conveyor system for conveying said at least one mould device may be configured for conveying said mould device from said injection station, subsequent to moulding material having been injected, to further transport, conveying, storing, etc.

According to an embodiment, said plurality of stations may comprise a receiving station, wherein said mould device is unlocked by an unlocking activator, in case mould parts are locked, and the mould device is operated to be in an open state.

According to an embodiment, said plurality of stations comprise an open state preparation station, where said mould device is treated in an open state.

According to an embodiment, said conveyor system for conveying said at least one mould device between a plurality of stations may comprise at least one carrier beam, which is configured to reciprocate in an at least partly horizontal direction (F) with a fixed horizontal stroke.

According to an embodiment, said at least one carrier beam, which is configured to reciprocate in an at least partly horizontal direction, may comprise a plurality of carrier sub-beams each having at least one vertically oriented carrier sub-beam pin.

According to an embodiment, said plurality of carrier sub-beams each having at least one vertically oriented carrier sub-beam pin and/or said at least one vertically oriented carrier sub-beam pin of each carrier sub-beam may be configured for being moved in the vertical direction.

According to an embodiment, at least one of said plurality of stations may comprise two carrier plates each having at least one vertically oriented carrier pin, which carrier plates are configured for being moved away from each other and towards each other in the direction of said at least one carrier beam.

According to an embodiment, said plurality of stations may be configured as modules that may be added, removed, exchanged, interchanged, etc. in relation to the direct injection moulding system.

According to an embodiment, said modules of said plurality of stations may have separate frames that may be disconnected and/or connected to the other modules in the direct injection moulding system.

Thus, for example new functions may be given to the already implemented direct injection moulding system or one or more modules may be removed or exchanged in case of maintenance, etc. Each station may have its separate frame that may be connected, e.g. bolted, to the other stations to form a base frame for the system. Thus, a change of the modular station configuration may be effected quickly.

According to an embodiment, a plurality of stations may comprise a number of plural stations modules that may be disconnected, connected, interchanges and/or exchanged in the direct injection moulding system, wherein each of said plural stations modules comprises a plurality of stations, each being configured as a module.

Hereby, it may be achieved that a large degree of flexibility is enabled since a plural stations module that in itself comprises a plurality of stations, may be moved as a (working) module that may be e.g. added or removed from a direct injection moulding system. Thus, a "double" modularity is achieved, since the "plural stations module" may be combined not only with other "plural stations modules", but may additionally be combined with single station modules. Also, it will be understood that e.g. one of the single station modules, may be removed as a module from a "plural stations module".

According to an embodiment, said conveyor system for conveying said at least one mould device between a plurality of stations may be configured modularly with the length of said at least one carrier beam corresponding to the number of stations.

Hereby, the carrier beam, e.g. the walking beam may be configured modularly, e.g. whereby a carrier beam may be shortened, in case a station is removed, by removing a modular length of the carrier beam and correspondingly, a carrier beam may be increased in length, in case a station is added, by adding a modular length of the carrier beam. Thus, a change of the modular station configuration may be effected quickly.

According to an embodiment, said conveyor system for conveying said at least one mould device between a plurality of stations may be configured with said fixed horizontal stroke adapted in view of a station requirement.

According to an embodiment, the system may comprise a mould device according to any one of the above examples.

According to an embodiment, the system may comprise a plurality of mould devices being independently movable between said plurality of stations and/or to and from other locations such as storage locations, curing locations, heating locations and buffer locations.

Hereby, further advantages provided by the mould devices may be achieved, e.g. advantages provided by the mould devices being independently movable and/or being individually identifiable.

By use of identifiers for the mould devices and/or parts of the mould devices, it may be achieved that a plurality of mould devices may be used in a direct injection moulding system, where the characteristics of the footwear that may be produced by each mould is identifiable by the identifiers. Thus, the footwear being produced may not be identical for e.g. a group of mould devices and the footwear being produced by a mould device may be a unique footwear, e.g. as regards size, shape, left/right and/or any other characteristic. When each of the plurality of mould devices that as mentioned above may be moved or conveyed independently, reaches e.g. a workstation, the e.g. machinery or control unit may e.g. read the identifier(s) and may based hereon determine which processing needs to be made at the particular step.

A further versatility and/or flexibility may be achieved since the mould devices may be moved, conveyed, etc. in consideration of the actual requirements, e.g. a number of mould devices may be stored, for example when curing, while others may be allocated to actual processing at a number of stations. Further, it is noted that at any time a number of mould devices may be being processed at a number of stations, but that the footwear being allocated to each of these mould devices may differ from each other, which is made possible since the mould devices are individually identifiable. Also, it is noted that the mould devices need not move sequentially, but that the e.g. conveying or moving of a particular mould device may be effected in view of the actual requirements and that for example a mould device, which has been stored in order to await a temperature reduction or increase, may be moved further on for further processing, when the desired temperature has been reached instead of being moved further on in a fixed sequence, e.g. the order in which the mould devices have arrived.

According to a further example, a method of production of footwear by direct injection moulding (DIP) may comprise the step of
- providing a mould device comprising a first side mould, a second side mould and a bottom mould, said first side mould and said second side mould comprising a last holding device,
- providing a last carrying a footwear upper, wherein said method further comprises
- positioning said last at a position between said first side mould and said second side mould,
- moving said first side mould and said second side mould laterally in relation to and towards each other, and
- gripping a part of said last or a last holder by said last holding device, when said first side mould and said second side mould are abutting each other.

Hereby, it is achieved that the mould device may hold the last by a last holding device that may be an integral part of the mould device and that the mould device thus may be an independent part that will not be relying on e.g. an external part for holding the last during the manufacturing process. Thus, the mould device may be moved independently and furthermore, an increased efficiency and precision may be achieved.

According to an embodiment, the method may further comprise moving said bottom mould vertically in relation to said first side mould and said second side mould to define at least part of a mould cavity for said direct injection moulding of footwear.

According to an embodiment, said method may further comprise injecting liquified material into said mould cavity for said direct injection moulding of footwear.

According to an embodiment, said method may further comprise
- moving said first side mould and said second side mould laterally in relation to and away from each other, and
- removing said last with said footwear upper, to which a sole part has been moulded by said direct injection moulding, for further processing.

It is noted that hereby advantage is taken of the fact that the gripping of the last is simply released, when the two side moulds are removed from each other, thus effecting increased efficiency.

### The figures

The invention will be explained in further detail below with reference to the figures of which
- Fig. 1: shows a schematically illustrated embodiment of a mould device, seen in a cross-sectional view and in an open state, for direct injection moulding of footwear,
- Fig. 2: shows the schematically illustrated mould device, seen in a cross-sectional view as shown in Fig. 1, but in connection with a last for direct injection moulding of footwear,
- Fig. 3: shows the schematically illustrated mould device and last, seen in a cross-sectional view as shown in Fig. 2, where the side moulds have been moved together whereby a last holder of the last has been gripped by the mould device,
- Figs. 4: shows the schematically illustrated mould device and last, seen in a cross-sectional view as shown in Fig. 3, and where the bottom mould has been lifted and a moulding material has been injected in a mould cavity,
- Fig. 5: shows the schematically illustrated mould device and last, seen in a cross-sectional view as shown in Fig. 4, but in a closed state with the bottom mould in an upper position and with the injected material forming a footwear sole,
- Fig 6: corresponds to Fig. 3, showing the schematically illustrated mould device and last, seen in a cross-sectional view, where the side moulds have been moved together to grip a last holder of the last, and where a further embodiment of a last holding device has been illustrated,
- Figs. 7a,b: show an embodiment of a mould device having a last holding device, seen in a perspective view,
- Fig. 8: shows correspondingly an embodiment of a mould device, seen in a perspective view, where the side moulds are in an open state,
- Figs. 9a-c: are flow diagrams illustrating possible flows using a mould device according to embodiments,
- Fig. 10: is a schematic view from above of a direct injection moulding system comprising a plurality of stations and wherein mould devices are transferred from one station to the next during manufacturing, and
- Fig. 11: is a corresponding schematic view from above of a direct injection moulding system illustrating modularity options of the stations and groups of stations.

### Detailed description

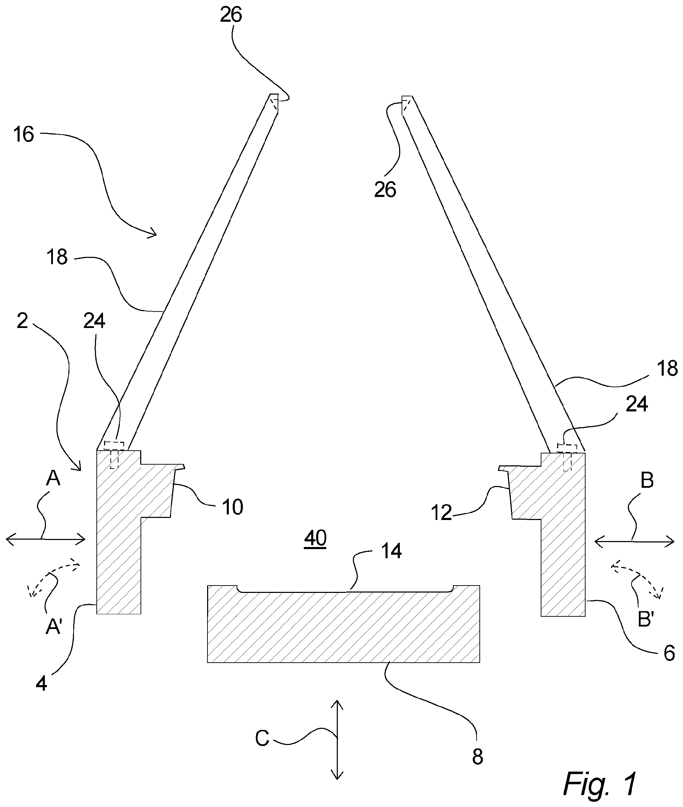

With reference to Fig. 1 an embodiment of a mould device 2 will be explained in detail in the following. The mould device 2 for direct injection moulding of footwear is schematically illustrated in Fig. 1, where it is seen in a cross-sectional view and in an open state.

The mould device 2 may be made out of metal, for example aluminium by e.g. CNC machinery and may as shown in Fig. 1 comprise a first side mould 4, a second side mould 6 and a bottom mould 8, which are arranged in such a manner that the mould 2 may be opened and closed, e.g. by the first side mould 4 and the second side mould 6 being able to be moved laterally in horizontal directions as indicated with the arrows A and B, respectively, and by the bottom mould 8 being arranged to be moved in the vertical direction as indicated with the arrow C. It is noted that additionally the side moulds 4 and 6 may be moved angularly, e.g. flipped or tilted, which will be elucidated later on, e.g. in connection with the mould device being used in a conveying system such as a walking beam system. Such a flipping or tilting of the side moulds is indicated in Fig. 1 by the curved arrows A' and B', which are depicted in dash lines.

As shown in Fig. 1, the first side mould 4 and the second side mould 6 may be provided with a first side surface 10 and a second side surface 12, respectively, that for example have been made during the e.g. CNC milling, and which generally define a desired form of a side part of a shoe sole to be moulded. Further, the bottom mould 8 may correspondingly be provided with a bottom inner surface 14, which have been made during the e.g. CNC milling and which generally has a form corresponding to a desired form of the underside of the shoe sole to be moulded, e.g. defining a mould cavity 40.

As furthermore illustrated in Fig. 1, the mould device 2 may be arranged with a last holding device 16 that may comprise two last positioning arms 18, e.g. one placed in connection with each of the side moulds 4 and 6, respectively. The last holding device 16, e.g. the last positioning arms 18 may be arranged such as it will appear in greater detail from the following that at a distance above the first side mould 4 and the second side mould 6, e.g. at their upper ends, they will cooperate to hold a last or a last holder, when the first side mould 4 and the second side mould 6 are moved together in abutting positions. To this means, the last positioning arms 18 may comprise schematically illustrated arm gripper parts 26 that will cooperate with last gripper parts that will be explained further on. Alternatively, a separate part may serve for carrying the e.g. last positioning arms 18 for holding a last or a last holder.

The last positioning arms 18 may be connected to the first side mould 4 and the second side mould 6 by fixing devices 24, e.g. threaded connections, bolt connections, clamp connections or the like. The fixing devices 24 may be releasable, e.g. in order to exchange the last positioning arms 18 for arms being e.g. longer or shorter.

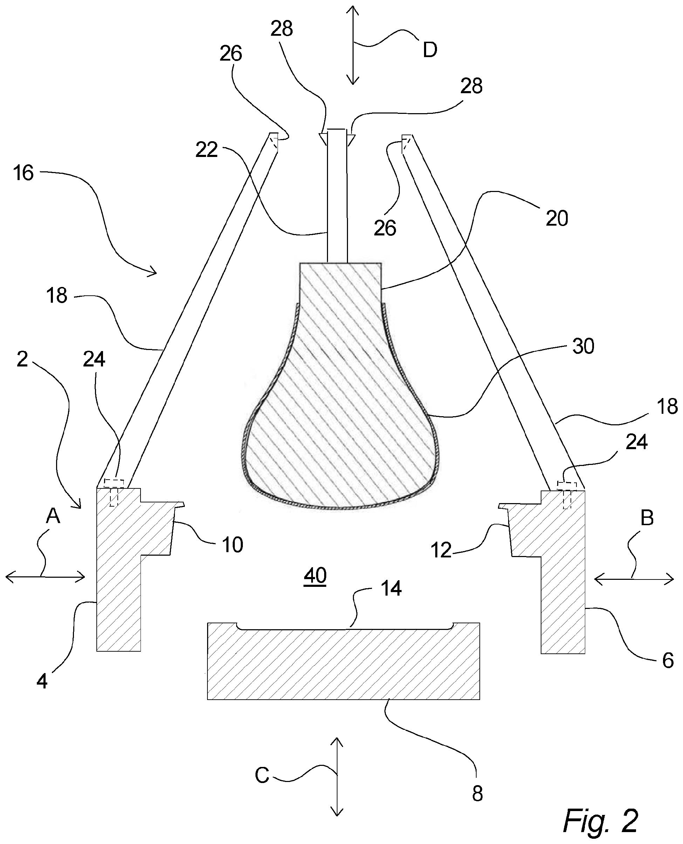

As further shown in Fig. 2, which corresponds to Fig. 1, the schematically illustrated mould device 2 is here seen in connection with a last 20 for use in e.g. direct injection moulding of footwear. The last 20, which is also seen in a cross-sectional view, is connected to a last holder 22 and the last is carrying a footwear upper 30. The last 20 with the footwear upper 30 can be moved in various directions including downwards in relation to the mould 2 as indicated with the arrow D. The last 20 with the footwear upper 30 may be moved towards the mould device 2 and positioned in relation to this by means of an automated handler, an automated positioning device, e.g. an industrial robot, etc. (not shown in Fig. 2). It will be understood that when performing such a step, it is required that the mould 2 is in an at least partly open state in order to allow the last 20 to move into the mould 2. Hereafter the mould 2 may be closed, thus forming a mould cavity 40 between the footwear upper 30, the first side mould 4, the second side mould 6 and the bottom mould 8. As explained above, the last 20 and the last holder 22 has been positioned such that the last holding device 16, e.g. the last positioning arms 18 will grip the last 20 or the last holder 22, e.g. by gripping the last gripper parts 28 that correspond to the arm gripper parts 26, whereby these parts will be fixed to each other.

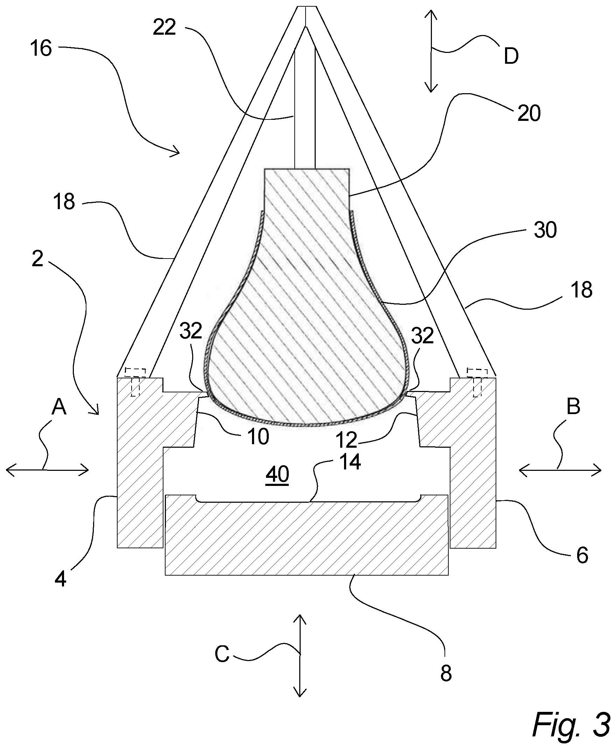

This has been illustrated in Fig. 3, where the side moulds 4 and 6 have been moved into an abutting relationship and where it is shown that a mould cavity 40 is formed by the first side surface 10, the second side surface 12, the part of the upper 30 facing downwards, e.g. restricted by the contact with the lip 32 of the first and second side surface and the bottom mould surface 14, which in fig. 3 is illustrated moving upwards, before having reached an end position.

It will be understood that the mould 2 at a point will be attached to injection moulding equipment (not shown in here), by means of which injection material is injected into the mould cavity, where it comes into contact with the first side surface 10, the second side surface 12, the bottom mould surface 14 and the bottom parts of the footwear upper 30. It will be understood that the lip 32 and the contact surfaces of the upper 30 are forced into contact so that the flow of the injection material cannot pass out of the mould cavity via the contact surfaces and the lip 32. When the injected material has taken the shape of the mould cavity, it is being cured.

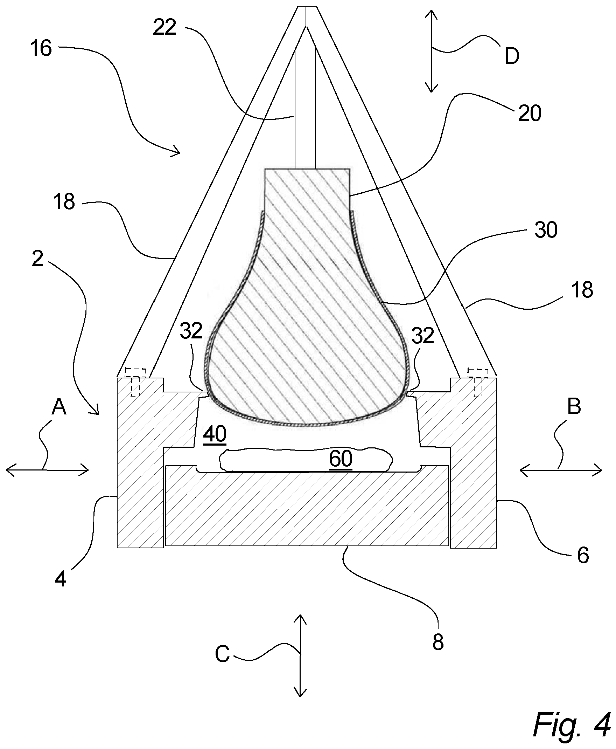

As shown in Fig. 4, the injection material may be introduced into the mould cavity 40, e.g. by introducing it to the bottom inner surface 14 as injected material 60 prior to the closing of the mould device 2, where the mould device 2 subsequently may be closed, e.g. by closing also the bottom mould 8, allowing the injected material to expand to fill the mould cavity 40 and to bond to the lower part of the upper 30.

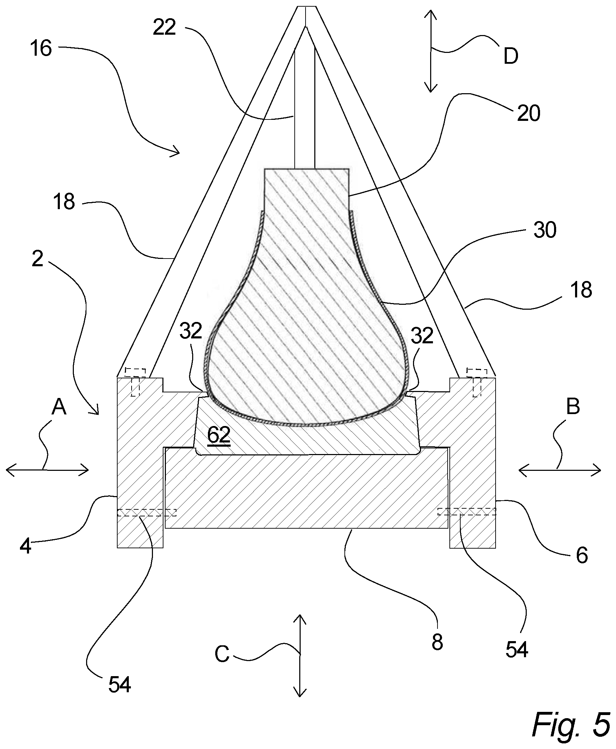

Fig. 5 shows the stage where the bottom mould 8 has been moved upwards as indicated in the vertical direction C, where the bottom mould 8 abuts the protrusions of the first side mould 4 and the second side mould 6, thus closing the mould cavity 40. When the mould device 2 is closed, the mould cavity 40 is closed to the surrounding environment, ensuring that the injected material 60, when expanded, has taken the shape of the mould cavity 40 and forms the footwear sole 62.

In Fig. 5 it is furthermore indicated that the bottom mould 8 has been locked to the first side mould 4 and the second side mould 6 by bottom mould locking taps 54, that may have been moved to perform the locking action by e.g. actuator means (not shown in Fig. 5). Hereby, it is achieved that the bottom mould 8 will be held in place, thereby obviating e.g. a constant application of a force to the bottom mould. The schematically illustrated bottom mould locking taps 54 as shown in Fig. 5 are exemplary illustrations only and various other configurations may be applied, including separate parts that are locked to the mould parts, etc.

In principle, when the injected material 60 has cured, the bottom mould 8, when unlocked, may be moved downwards in the direction C, while simultaneously the first side mould 4 and the second side mould 6 may be moved in a horizontal movement as indicated by the arrows A and B, respectively, thereby opening the footwear injection mould. As it will be explained further on, the first side mould 4 and the second side mould 6 may be locked to each other, therefore requiring an unlocking prior to opening and before the last 20 and the upper 30 with the sole 62 attached may be removed from the mould device 2.

It is noted that the injected material may be for forming a midsole and that an outsole (not shown in Fig. 5) in such a case has been provided in the bottom mould in advance.

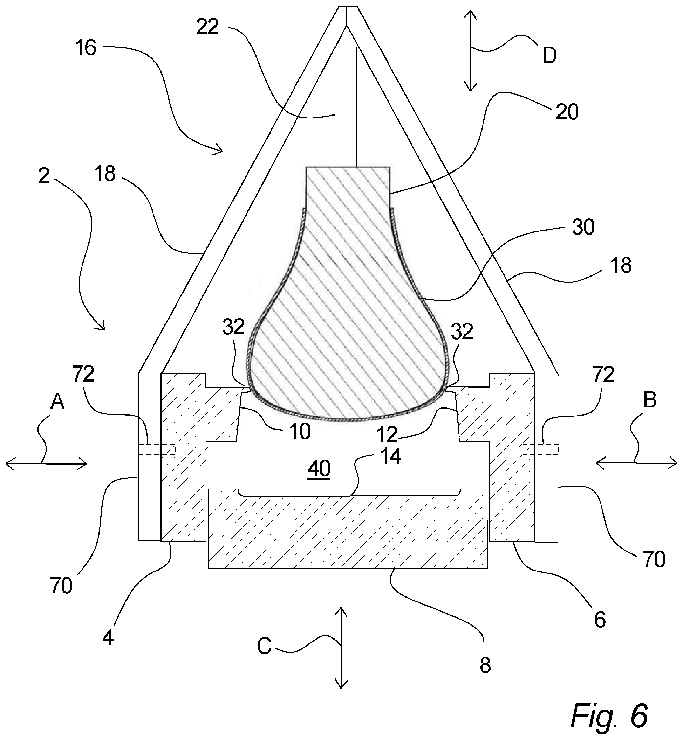

Fig. 6 corresponds essentially to Fig. 3, in that Fig. 6 shows the schematically illustrated mould device 2 and last 20, seen in a cross-sectional view, where the side moulds 4 and 6 have been moved together to grip a last holder 22 of the last 20. A further embodiment of the last holding device 16 has however been illustrated, where the last positioning arms 18 are connected to a last holding device base 70, which may e.g. comprise a base part on each side of the mould device 2, e.g. associated with each of the first and second side moulds 4 and 6. The last holding device base 70 may be fixed permanently to the mould parts, but may instead be connected in a removable manner, e.g. by means such as base connectors 72 that are indicated in Fig. 6, e.g. taps, screws, other threaded connectors, clamps or the like. It will be apparent to a skilled person that other variations are possible, including the configuration of the last holding device base 70 and/or the last positioning arms 18.

Also, it is noted that the bottom mould 8 may be connected to other mould parts in a removable manner.

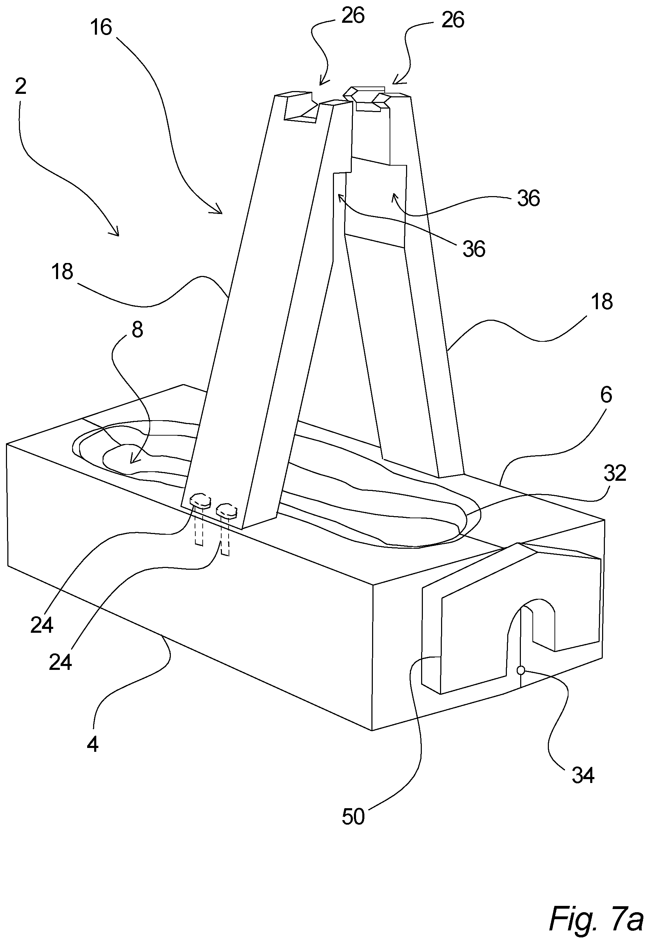

To further illustrate an embodiment of a mould device 2 having a last holding device 16, Fig. 7a shows such a mould device in a perspective view. Here, it is shown that the last positioning arms 18 may be fixed to each side mould by fixing devices 24 in the form of threaded bolts. Further, an exemplary embodiment of the arm gripper parts 26 is indicated here. It should be noted that the last positioning arms 18 may have recesses 36 near the top in order to clear the last or the last holder, when this is introduced and gripped.

Further, it is shown in Fig. 7a that the upper part of the mould cavity 40 as defined by the side moulds may comprise a lip 32 for contacting the footwear upper on the last. Also, it is indicated that the mould device 2 comprises an injection channel 34 at one end, which injection channel 34 may be arranged in the parts of the side moulds 4, 6 that are in abutment. Furthermore, a mould locking device 50 is shown, which facilitates the locking of the two side moulds to each other. The mould locking device 50 is shown at one end, but one may be placed at each end of the mould device 2. It is noted that the mould locking device 50 is illustrated in the figures in a schematic manner to illustrate the functionality and that various designs, configurations, locations of the lock, etc., including use of various activators and the like may be applied as it will be apparent to a skilled person.

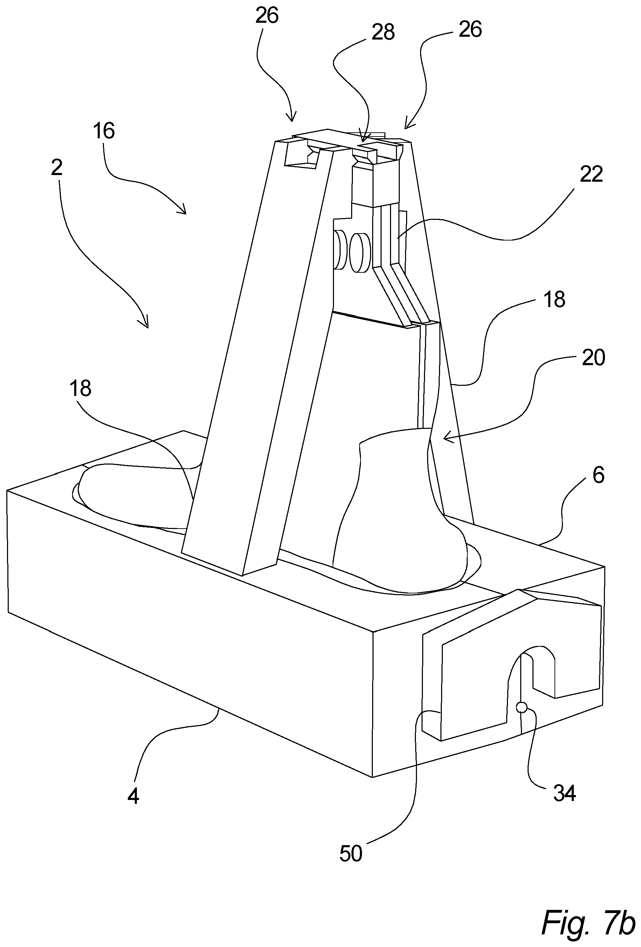

Fig. 7b shows in a perspective view an embodiment of a mould device 2 having a last holding device 16 essentially corresponding to the embodiment shown in Fig. 7a, but where a last 20 carried by a last holder 22 is gripped by the last positioning arms 18, e.g. by the arm gripper parts 26 having gripped the last gripper parts 28.

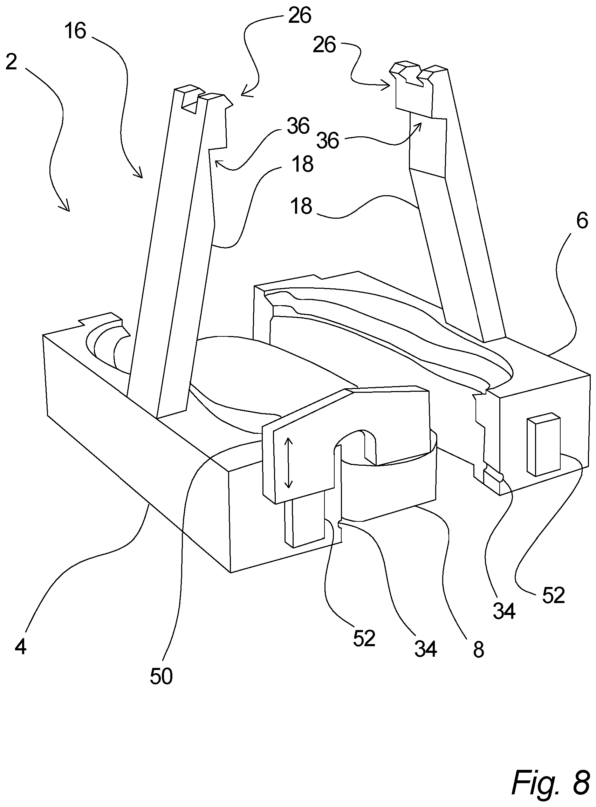

Fig. 8 shows correspondingly an embodiment of a mould device 2, seen in a perspective view, where the side moulds 4, 6 are moved away from each other such that the mould device 2 is in an open state. Here, it is furthermore indicated that the mould locking device 50 is cooperating with a locking tap 52 on each of the side moulds 4, 6. The locking may be effected by moving the mould locking device 50 down, when the side moulds 4, 6 are in abutment, and correspondingly the mould device 2 may be unlocked by moving mould locking device 50 upwards, e.g. a indicated by the double-arrow.

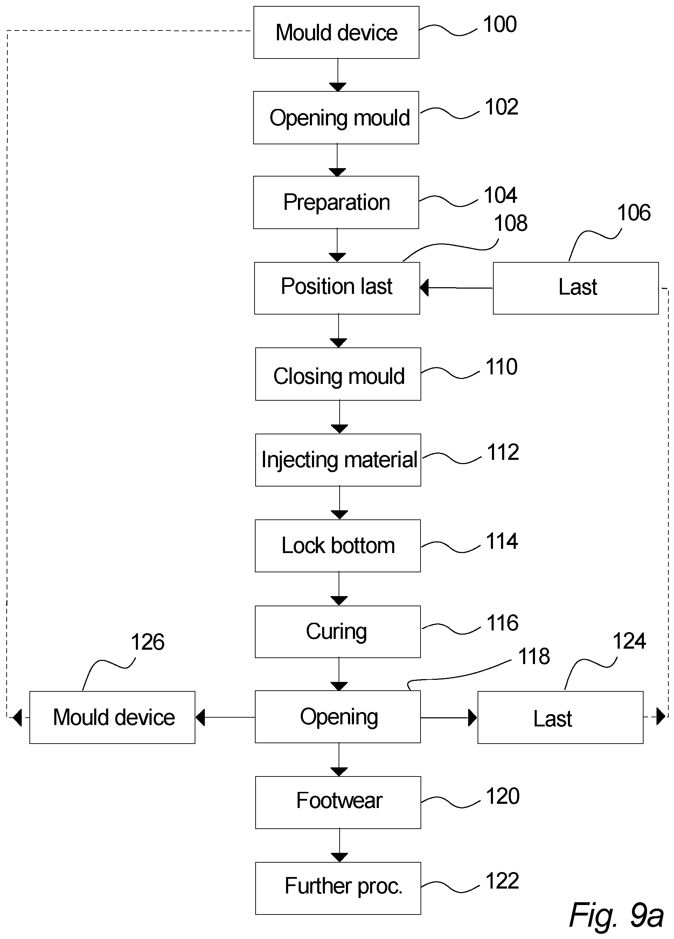

Fig. 9a-9c are flow diagrams illustrating possible flows in a part of a footwear production using a mould device or a system according to an embodiment.

Fig. 9a is a flow diagram where at 100 a mould device is received and subsequently opened 102, e.g. unlocked, if it, e.g. its parts, have been provided in locked form, and the side moulds with corresponding last positioning arms are moved to be spaced from each other. Possibly, preparation 104 of the mould device may be performed, e.g. application of anti-stick agents, lubrication or the like to the surfaces of the side moulds and the bottom mould in case this has not been taken care of in an earlier stage. It is noted that in connection with the preparation 104 of the mould device, the side moulds may be flipped individually, e.g. tilted away from each other in order to make more space for the operations, provide access to the inner faces, etc. This may in particular be the case, when the mould device is arranged in a transport system such as a walking beam system (as will be explained later), where the mould devices possibly may be arranged relatively close together.

A last is provided at 106, which last has been applied with a footwear upper matching the piece of footwear that is being manufactured. The last is being positioned at step 108 in relation to the mould device and thus also in relation to the last positioning arms, whereby the last (or a last holder fixed to the last) will be gripped and held, when the mould, e.g. the side moulds, are closed at 110 and locked to each other.

At this stage, the moulding material may be injected at 112, while e.g. a bottom mould of the mould device is still being moved upwards, until it at step 114 is locked to the rest of the mould device. At this stage, the various parts of the mould device are locked to each other, thus obviating any external means for holding it together, as the last is similarly held by the last holding device, e.g. the last positioning arms, which means that the mould device with the footwear now having the moulded e.g. outer sole or midsole is not necessarily attached to any machinery and may be moved independently of any machinery apart from transport means such as a conveyor. Thus, while curing at 116, the mould device may be e.g. stored at a buffer zone until a predefined curing stage, for example estimated from a temperature measurement of the mould, the last, the moulded sole or any other part. Hereafter the mould device may be opened at 118 and the produced footwear may be retrieved at 120, whereafter it may be subjected to any further processing 122 to gain a desired condition, appearance, etc.

In connection with steps 118 and 120, the footwear is being removed from the last that has been used in the production of this particular piece of footwear, thus retrieving the last as indicated at 124. This last may as indicated by the dash line be reintroduced in the production, e.g. by allocating it to a production corresponding to the last size and type, applying a footwear upper to it, etc.

Similarly, the mould device that is retrieved at 126 after having been opened and after the last and the produced footwear has been removed, may be reintroduced in the footwear production, e.g. by cleaning it in the open state that it now is in, possibly by applying anti-stick agents or the like, by closing it and by e.g. keeping it at a specified ambient temperature, cooling or heating it in view of moulding production considerations, etc. before it as indicated may be reintroduced in the production line at 100.

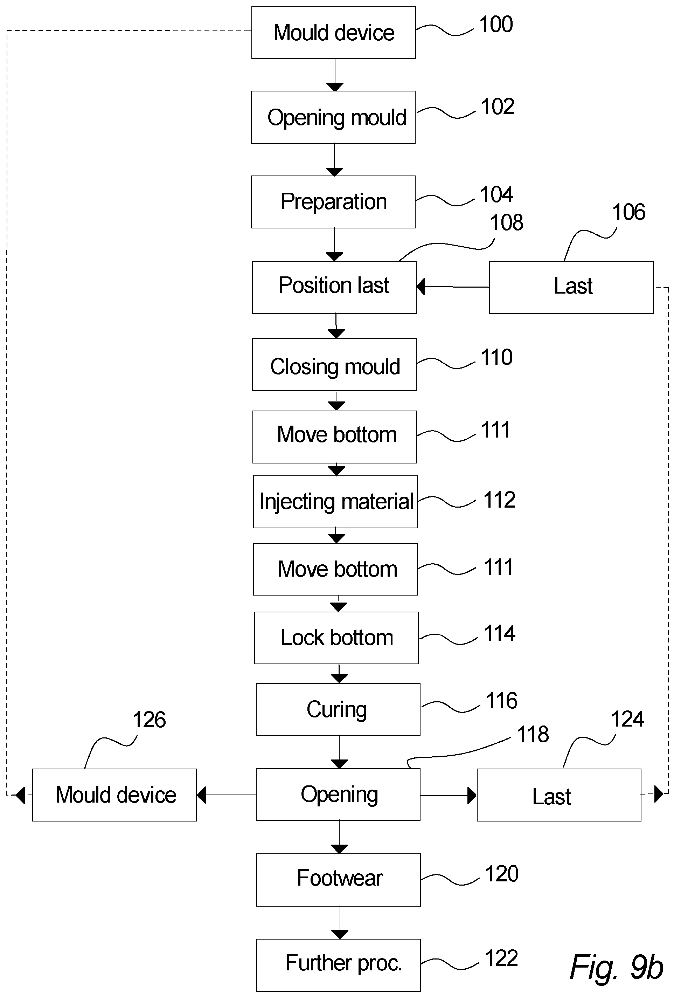

The flow diagram shown in Fig. 9b corresponds to the one shown in Fig. 9a, but in Fig. 9b it is further illustrated that after closing the mould at 110, the bottom mould is moved upwards at 111. At a point in time the material is injected at 112 and subsequent to this, the bottom is moved further upwards at 111 until it is locked at 114.

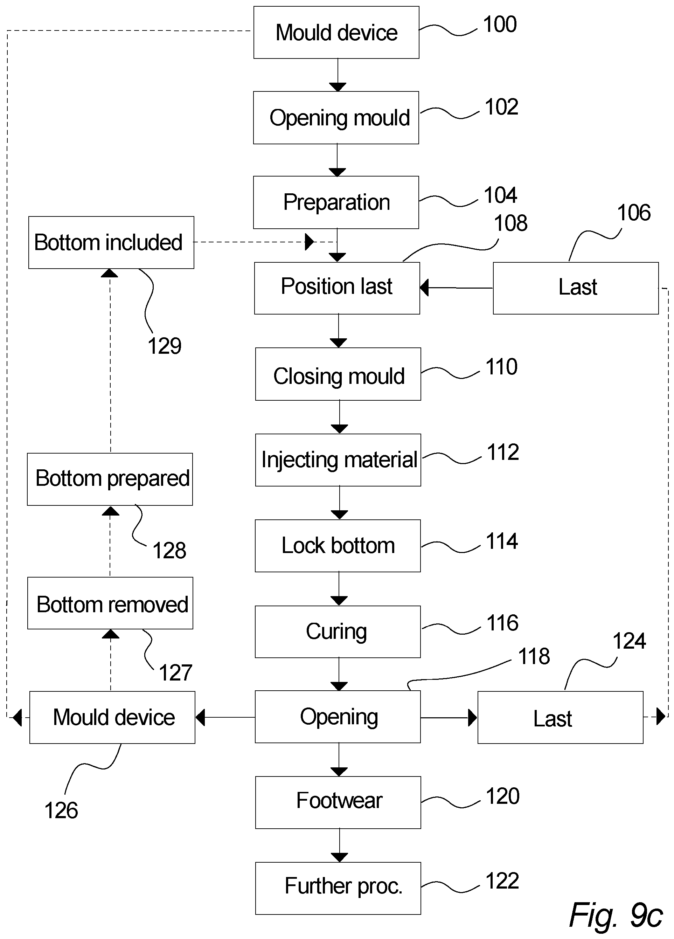

Furthermore, the flow diagram shown in Fig. 9c corresponds to the one shown in Fig. 9a, but in Fig. 9c it is further illustrated that a separate flow of preparation of the bottom mould may be included in the footwear production process. Thus, for example in connection with step 126, where the mould device is retrieved, the bottom mould may be removed at 127 and taken out for a separate flow of preparation, e.g. including a bottom preparation step 128, whereafter the bottom later meets the mould device itself again and is included at 129, for example immediately after the mould device has been prepared at 104 as indicated in Fig. 9c.

It is noted that the various embodiments as illustrated in Figs. 9a, 9b and 9c may be combined in any combination and that other variations and/or modifications may be included as well.

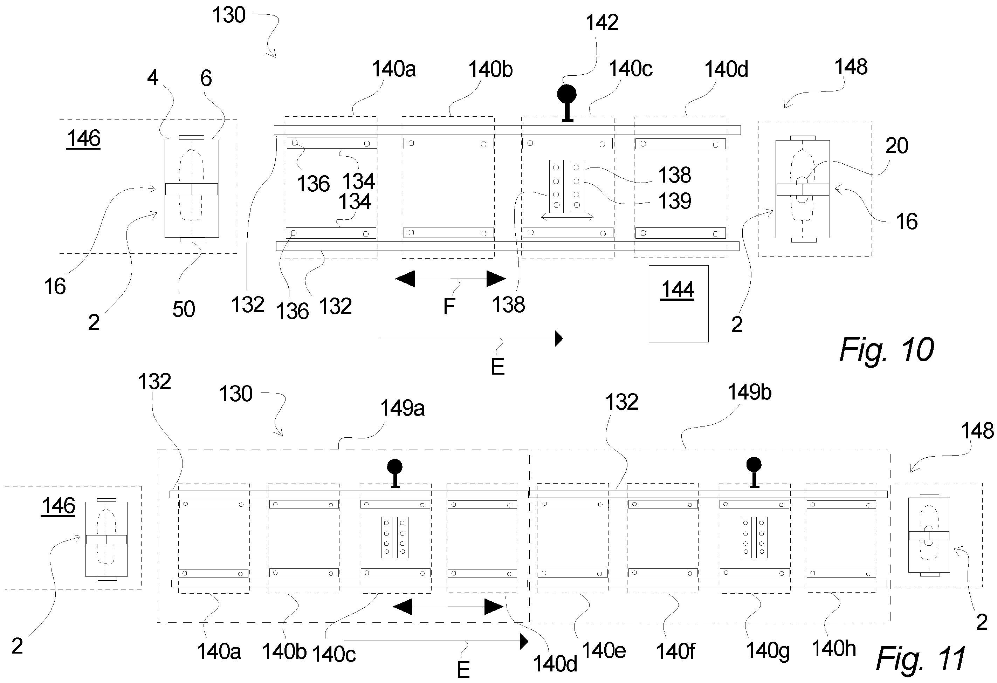

Fig. 10 is a schematic view from above of a direct injection moulding system 130 comprising a plurality of stations 140a-140d, and wherein mould devices, e.g. as shown with the schematic example 2, are transferred from one station to the next during manufacturing. The system comprises a transport system for transferring the mould devices 2, which transport system may comprise various transport devices, e.g. conveyors, carts, etc. At e.g. the location of a plurality of stations 140a-140d, the transport system may comprise a conveyor system essentially comprising for example two carrier beams 132, which are arranged along the length of the production zone that is covered by the stations 140a-140d and at a level below these stations. As indicated by the double-arrow F in Fig. 10, these carrier beams 132, which are also referred to a walking beams, are configured to reciprocate, e.g. at a fixed pattern, meaning that e.g. after a predetermined time or in dependence on a control parameter, the carrier beams 132 are moved forward, i.e. in the production direction E and subsequently moved back again, where they pause. Thus, this pattern is repeated cyclically and may be effected in various manners and by use of various drive arrangements. For example, the drive may be effected by a controlled drive motor having a crank on a drive wheel, where the motor is controlled for each cycle to move the drive wheel one revolution. Another drive arrangement may be a linear drive, e.g. like a servo drive. Other options are possible and will be available, as it will be apparent to a skilled person.

To further effect the transfer of the mould devices 2, each carrier beam 132 has as indicated a carrier sub-beam 134 at each station, which carrier sub-beams 134 have carrier sub-beam pins 136. The carrier sub-beams 134 and/or the carrier sub-beam pins 136 are arranged such that they are moved upwards during at least part of the movement of the carrier beams 132 in the production direction, whereby the carrier sub-beam pins 136 may engage with corresponding tap holes in the bottom of the side mould device 2, e.g. in the bottom of the side moulds 4, 6. At a point, e.g. when the carrier beams 132 reverse, the carrier sub-beam pins 136 are moved downwards again and will disengage with the respective side mould devices 2, thus meaning that any side mould device 2 that has been at one of the stations, has been transferred a fixed length, corresponding to the distance between two neighbouring stations 140a-140d.

It is noted that other means than e.g. carrier sub-beam pins 136 and corresponding tap holes may be used for effecting the movement, transfer, etc.

Further, at the respective stations, further actuators or the like may be arranged, e.g. in order to handle the mould device 2 during opening, positioning of last, closing of side moulds and bottom mould, injection of moulding material, curing, etc.

Thus, a pair of carrier plates 138 may be arranged such that they will be immediately below a possible mould device at the particular station. Such a pair is illustrated in connection with the station 140c, where the pair of carrier plates 138 are arranged in parallel and may be moved away from each other and towards each other as indicated by the double-arrow. Each carrier plate has a number of e.g. carrier plate pins 139 and the carrier plates 138 and/or the carrier plate pins 139 are arranged such that they may be moved upwards and downwards, where at the upper level they may engage with corresponding tap holes in the bottom of the side mould device 2, e.g. in the bottom of the side moulds 4, 6. Thus, by moving a pair of carrier plates 138 from each other, when the pins engage the side moulds of a mould device 2, the side moulds 4, 6 may be moved away from each other, whereby the mould device is opened. Correspondingly applies, when the pair of carrier plates 138 is moved towards each other, whereby the mould device 2 is closed, e.g. the side moulds are closed.

Further actuators may be arranged at one or more of the stations, e.g. an actuator for opening or closing of a mould locking device 50, a bottom mould locking tap 54, etc. depending on the functionality that a particular station is intended to have.

As furthermore shown in Fig. 10, a mould device infeed 146 is arranged to feed the system 130 with empty mould devices 2, of which one is illustrated, seen from above, to the left in Fig. 10. Such a mould device infeed 146 may be a conveyor. When the mould device 2 is fed to the system 130, e.g. to the station 140a, the mould device 2 may be unlocked and the side moulds may be moved away from each other, e.g. by a pair of carrier plates 138 as explained above.

At the next step performed by the system 130, the mould device 2 will be transferred to the station 140b, where any preparation can be performed in the open state, e.g. inspection, application of anti-stick agents or the like.

It is noted that in connection with such operations as inspection, cleaning, application of anti-stick agents or the like which preferably takes place in an open state, the side moulds of the mould device may be flipped or tilted, e.g. as it has been illustrated and explained in connection with Fig. 1, whereby e.g. more space is made available for the respective operations, which may be particularly advantageous when the mould device is used in a walking beam or carrier beam system, where distances to neighbouring moulds may be relatively small.

In the subsequent step, the mould device is transferred to the station 140c, where by means of an automated handler 142, e.g. an industrial robot, a last is introduced to the open mould device 2 and the side moulds 4, 6 are moved towards each other to close the mould device, e.g. by a pair of carrier plates 138 as explained above, whereby the last is held by the last holding device 16. The mould locking device 50 is activated to keep the side moulds locked to each other. Also, the bottom mould may be moved an initial step towards its end position.

Subsequently, the mould device 2 is transferred to the last station 140d, where mould injection equipment 144 is arranged and may be connected to the injection channel 34 in order to inject moulding material to the mould cavity. The injection step may also include that the bottom mould is moved to its end position by an actuator, where it is locked in place, e.g. by a bottom mould locking tap 54 or by corresponding means.

At the end of the injection, and after the bottom mould has been locked in its end position, the mould device may now be moved as an independent unit and may be moved to a suitable location for curing, storing, etc. In Fig. 10 it is shown that such a mould device 2 with a piece of footwear, e.g. an upper on a last 20 held by the last holding device 16, to which a sole part, e.g. an outsole, has been moulded, has been transferred to an outfeed 148. Such an outfeed 148 may be a conveyor, a cart, a transport means, etc.

It is noted that in connection with Fig. 10 four stations have been shown and explained, but fewer or more than four stations may as well be the case, depending on the actual functions that have to be exerted, e.g. in total and/or at each of the stations. The demands may be met by providing carrier beams of various lengths and it will be understood that the system may be applied in a modular fashion as it will be further exemplified in the following.

Thus, it will be understood that the stations 140a-d that have been illustrated in Fig. 10 may be modules that may be added, removed, exchanged, interchanged, etc., thus for example giving new functions to the already implemented direct injection moulding system or in case of maintenance, etc. Thus, each station may have its separate frame that may be connected, e.g. bolted, to the other stations to form a base frame and similarly, the carrier beams 132 may be configured modularly, e.g. whereby a carrier beam may be shortened, in case a station is removed, by removing a modular length of the carrier beam and correspondingly, a carrier beam may be increased in length, in case a station is added, by adding a modular length of the carrier beam. Thus, a change of the modular station configuration may be effected quickly.

It is furthermore noted that in the example of Fig. 10, the handling of only one mould device has been explained, but it is clear that a mould device 2 may be present at more stations or at all stations at any time.

The modularity of the direct injection moulding system 130 will be further illustrated with reference to Fig. 11, which shows a system drawn in a smaller scale and wherein only some of the major parts have been shown. Thus, a mould device infeed 146 with a mould device 2 is shown, ready to be transferred to the direct injection moulding system 130 and where correspondingly an outfeed of mould devices with soled footwear 148 is arranged at the other end of the system 130. The illustrated system 130 comprises two plural stations modules 149a and 149b, but it will be understood that more than two (or one only) may be used to form the system 130. Also, it will be understood that furthermore one or more additional stations, e.g. stations like one or more of the stations 140a-140h may be added to the two plural stations modules 149a and 149b, e.g. in order to achieve a desired functionality.

By such an arrangement, it may be achieved that a large degree of flexibility is enabled since a plural stations module 149a or 149b that in itself comprises a plurality of stations, e.g. 140a-140d, may be moved as a (working) module that may be e.g. added or removed from a direct injection moulding system. Thus, a "double" modularity is achieved, since the "plural stations module" may be combined not only with other "plural stations modules", but may additionally be combined with single station modules, e.g. one or more of 140a-140h. Also, it will be understood that e.g. one of the single station modules, e.g. 140a-140h, may be removed as a module from a "plural stations module", e.g. 149a or 149b.

In the above description, various embodiments of the invention have been described with reference to the drawings, but it is apparent for a person skilled within the art that the invention can be carried out in an infinite number of ways, using e.g. the examples disclosed in the description in various combinations, and within a wide range of variations within the scope of the appended claims.

### List of reference numbers

- 2: Mould device
- 4: First side mould
- 6: Second side mould
- 8: Bottom mould
- 10: First side surface
- 12: Second side surface
- 14: Bottom inner surface
- 16: Last holding device
- 18: Last positioning arm
- 20: Last
- 22: Last holder
- 24: Fixing device
- 26: Arm gripper part
- 28: Last gripper part
- 30: Footwear upper
- 32: Lip
- 34: Injection channel
- 36: Recess
- 40: Mould cavity
- 50: Mould locking device
- 52: Locking tap
- 54: Bottom mould locking tap
- 56: Last holding device connecting tap
- 60: Injected material
- 62: Footwear sole
- 70: Last holding device base
- 72: Base connector
- 100: Receiving mould device
- 102: Opening mould device
- 104: Preparation of mould device
- 106: Providing a last
- 108: Positioning of last
- 110: Closing of mould
- 111: Move bottom
- 112: Injecting material
- 114: Lock bottom mould
- 116: Curing
- 118: Opening
- 120: Providing soled footwear
- 122: Further processing
- 124: Retrieving last
- 126: Retrieving mould device
- 127: Bottom removed
- 128: Bottom prepared
- 129: Bottom included
- 130: Direct injection moulding system
- 132: Carrier beam
- 134: Carrier sub-beam
- 136: Carrier sub-beam pin
- 138: Carrier plate
- 139: Carrier plate pin
- 140a-d: Stations
- 142: Automated handler
- 144: Mould injection equipment
- 146: Mould device infeed
- 148: Outfeed of mould device with soled footwear
- 149a, b: Plural stations module

- A: First side mould lateral movement
- A': First side mould angular movement
- B: Second side mould lateral movement
- B': Second side mould angular movement
- C: Bottom mould vertical movement
- D: Vertical movement of last
- E: Production direction
- F: Reciprocation directions

## Claims

1. A direct injection moulding system (130) for performing at least part of a direct injection moulding manufacturing of footwear, said system comprising at least one mould device (2) for defining at least partly a mould cavity (40) in combination with a last (20) carrying a footwear upper (30), said system comprising a conveyor system for conveying said at least one mould device (2) between a plurality of stations (140a, 140b, 140c, 140d), said at least one mould device (2) comprising a last holding device (16), which is configured for holding said last (20) carrying said footwear upper at least when performing the direct injection moulding of a sole part onto said footwear upper,
wherein the direct injection moulding system (130) is configured for conveying said at least one mould device (2) from one station to a subsequent station out of said plurality of stations (140a, 140b, 140c, 140d) with said last holding device (16) being an integrated part of said mould device (2).

2. The system according to claim 1, wherein said mould device (2) comprises mould parts that are relatively movable and that the system is configured for effecting a relative movement of at least some of said mould parts at at least one of said plurality of stations (140a, 140b, 140c, 140d), wherein said mould parts comprise
- a first side mould (4) and a second side mould (6),
- a bottom mould (8),
wherein said first side mould (4) and said second side mould (6) are configured to be movable laterally in relation to each other, and
wherein said bottom mould (8) is configured to be movable vertically in relation to said first side mould (4) and said second side mould (6).

3. The system according to claim 2, wherein said last holding device (16) comprises a last positioning arm (18) fixed to each of said first side mould (4) and said second side mould (6), said last positioning arms (18) being designed for gripping said last (20) or a last holder (22) holding said last (20).

4. The system according to any one of claims 1-3, wherein said plurality of stations comprise a pre-injection station (140c), where said last (20) carrying said footwear upper is introduced to said mould device (2) and said last holding device (16) is operated to hold said last (20) carrying said footwear upper, e.g. wherein said pre-injection station comprises an automated handler (142) for introducing and positioning said last (20) carrying said footwear upper to said mould device (2).

5. The system according to any one of claims 1-4, wherein said last holding device (16) is operated to hold said last (20) carrying said footwear upper by a relative movement of at least some of said mould parts, e.g. by a lateral movement of said first side mould (4) and said second side mould (6) in relation to each other.

6. The system according to claim 5, wherein said pre-injection station comprises a mould lock activator for locking mould parts, e.g. said first side mould (4) and said second side mould (6) in relation to each other.

7. The system according to any one of claims 4, 5 or 6, wherein said plurality of stations comprise an injection station (140d) arranged subsequent to said pre-injection station (140c), where said injection station (140d) comprises mould injection equipment (144) for injecting moulding material into said mould cavity (40), e.g. wherein said injection station (140d) may comprise a bottom mould actuator for moving the bottom mould (8) vertically in relation to said first side mould (4) and said second side mould (6) and wherein said injection station (140d) may comprise an activator for a bottom mould lock for locking said bottom mould (8) in the vertical direction.

8. The system according to claim 7, wherein said conveyor system for conveying said at least one mould device (2) is configured for conveying said mould device (2) from said injection station (140d), subsequent to moulding material having been injected, to further transport, conveying, storing, etc.

9. The system according to any one of claims 1-8, wherein said plurality of stations comprise a receiving station (140a), wherein said mould device (2) is unlocked by an unlocking activator, in case mould parts are locked, and the mould device (2) is operated to be in an open state, and/or wherein said plurality of stations comprise an open state preparation station (140b), where said mould device (2) is treated in an open state.

10. The system according to any one of claims 1-9, wherein said conveyor system for conveying said at least one mould device (2) between a plurality of stations comprises at least one carrier beam (132), which is configured to reciprocate in an at least partly horizontal direction (F) with a fixed horizontal stroke.

11. The system according to claim 10, wherein said at least one carrier beam (132), which is configured to reciprocate in an at least partly horizontal direction, comprises a plurality of carrier sub-beams (134) each having at least one vertically oriented carrier sub-beam pin (136), wherein said plurality of carrier sub-beams (134) each may have at least one vertically oriented carrier sub-beam pin (136) and/or said at least one vertically oriented carrier sub-beam pin (136) of each carrier sub-beam may be configured for being moved in the vertical direction.

12. The system according to any of claims 1-11, wherein at least one of said plurality of stations (140a, 140b, 140c, 140d) comprises two carrier plates (138) each having at least one vertically oriented carrier pin (139), which carrier plates (138) are configured for being moved away from each other and towards each other in the direction of said at least one carrier beam (132).

13. The system according to any of claims 1-12, wherein said plurality of stations (140a - 140h) are configured as modules that may be added, removed, exchanged, interchanged, etc. in relation to the direct injection moulding system (130), wherein said modules of said plurality of stations (140a - 140h) may have separate frames that may be disconnected and/or connected to the other modules in the direct injection moulding system (130) and wherein optionally a plurality of stations (140a - 140h) may comprise a number of plural stations modules (149a, 149b) that may be disconnected, connected, interchanges and/or exchanged in the direct injection moulding system (130), wherein each of said plural stations modules (149a, 149b) comprises a plurality of stations (140a - 140h), each being configured as a module.

14. The system according to any one of claim 10-13, wherein said conveyor system for conveying said at least one mould device (2) between a plurality of stations is configured modularly with the length of said at least one carrier beam (132) corresponding to the number of stations (140a, 140b, 140c, 140d; 140e, 140f, 140g, 140h), and wherein said conveyor system for conveying said at least one mould device (2) between a plurality of stations (140a, 140b, 140c, 140d; 140e, 140f, 140g, 140h) may be configured with said fixed horizontal stroke adapted in view of a station requirement.

15. The system according to any one of claims 1-14, comprising a plurality of mould devices (2) being independently movable between said plurality of stations and/or to and from other locations such as storage locations, curing locations, heating locations and buffer locations.
